# EUROPEAN PATENT APPLICATION

(11) **EP 4 560 188 A1**
(43) Date of publication of application: **28.05.2025**
(21) Application number: 23212424.8
(22) Date of filing: 27.11.2023
(51) Int. Cl.: F21V 5/00, G02B 19/00

(54) **ILLUMINATION ASSEMBLY**

(71) Applicant: Lumileds LLC, San Jose, CA 95131 (US)
(72) Inventor: Pfeffer, Nicola Bettina, San Jose, 95131 (US); van der Sijde, Arjen Gerben, San Jose, 95131 (US)
(74) Representative: Beckord & Niedlich Patentanwälte PartG mbB

(57) **Abstract**

The invention describes an illumination assembly (1) of a portable device (2), comprising an array (11) of semiconductor emitters (11E) and an imaging lens (10) arranged above the emitter array (11) and adapted to direct the light from each emitter (11E) into a corresponding region (11E_{image}) of a target area (T); characterized in that the imaging lens (10) comprises a surface pattern (10S) adapted to shape the light from adjacent emitters (11E) such that the corresponding imaged emitter regions (11E_{image}) overlap at the target area (T). The invention further describes a method of manufacturing such an illumination assembly (1), and a portable device (2) comprising such an illumination assembly (1).

## Description

### FIELD OF THE INVENTION

The invention describes an illumination assembly, a method of manufacturing such an illumination assembly, and a portable device comprising such an illumination assembly.

### BACKGROUND OF THE INVENTION

An array of individually addressable semiconductor emitters such as LEDs can be used to provide selective illumination for a target area. Selective regions of the target area can be illuminated by actuating the corresponding element of the emitter array. When all elements of the emitter array are active, the entire target area is illuminated. The array can comprise very small discrete emitters (e.g. micro-LEDs) mounted on a backplane or substrate, for example. Alternatively, the emitter array can be made from a single section of wafer, with gaps or patterned insulation to separate the individual emitters (referred to as a "segmented emitter"). A suitable optical element such as an imaging lens can project the light from each emitter into a corresponding region of the target area. An emitter array in combination with an imaging lens can be used as a flash for a digital camera arrangement of a mobile device such as a smartphone. An emitter array may also be used in an optical projection system for display illumination in an augmented reality or virtual reality application, for example. The individually addressable emitters of the flash can be switched on or off to control the amount of light that is cast onto different regions of the target area, whereby the active emitters can be driven with different current densities as appropriate. In this way, the target area (here, any objects, in the scene to be photographed, which will be illuminated by the flash can be selectively illuminated according to the current density distribution, i.e. proportionally to the applied current.

In addition to providing selective illumination in the visible spectrum, a similar kind of emitter may find use in various other applications. For example, an array of individually addressable infrared emitters can be deployed in a time-of-flight application; an array of individually addressable ultraviolet emitters can be deployed in an industrial UV curing application; etc.

Regardless of the application in which it is used, it is generally desirable to provide an emitter array in which the individual array elements are optically separate so that cross-talk between adjacent emitters is avoided. In this way, stray light from an active emitter is prevented from passing laterally into an adjacent inactive emitter, and the corresponding regions of the target area or scene will be illuminated with the desired high level of contrast. Optical separation of adjacent array elements can be done in various ways as will be known to the skilled person.

However, any measures to achieve optical separation can result in visible artefacts in the target area when adjacent array elements are active. For example, the illumination pattern projected into the target area can exhibit a darker "line" between regions illuminated by a pair of adjacent active emitters. In the case of a camera flash, such artefacts may even be noticeable in the resulting image. One approach to avoiding such undesirable lines of lower brightness in the projected illumination pattern might be to arrange discrete emitters closer together to further reduce the physical separation in between, but this can be difficult to achieve because of various constraints such as PCB tolerance, placement tolerance, solder process tolerance etc. For example, emitter dies with an area of 0.5 mm² may require a minimum spacing in the order of 50 µm. In the case of a monolithic die with electrically separate individual segments, the spacing between adjacent emitters can be as small as 8 µm, but even such a narrow separation width can be noticeable as a darker "gap" in the target area when adjacent regions are illuminated by corresponding adjacent emitters.

A further problem associated with a segmented emitter is that the light around the border of an illuminated region in the target area can have a colour that is noticeably different from the light in the illuminated region. Such artefacts may result from differences in the light propagation through epitaxial layers of a die and through any wavelength conversion layers (optical cross-talk). For example, blue pump light can be converted to white light by means of a suitable phosphor conversion layers applied over each LED, and stray light from the emission area of an active emitter can pass through the conversion layers of an adjacent inactive emitter, resulting in yellowish light.

A target area illuminated by such a segmented emitter array can therefore comprise primarily white light with discernible yellowish patches. Local colour inhomogeneity in the target area may also result from aggregation of phosphor particles in any wavelength conversion layer of the segmented array.

Therefore, it is an object of the invention to provide a way of overcoming the problems known from the prior art.

### SUMMARY OF THE INVENTION

The object of the invention is achieved by the claimed illumination assembly for a portable device, by the claimed method of manufacturing such an illumination assembly, and by a portable device comprising such an illumination assembly.

In the context of the invention, it shall be understood that the dimensions of the illumination assembly are very small, allowing it to be deployed in a compact portable device application such as a camera phone flash, an augmented reality headset, etc. It may be assumed that the diameter of the imaging lens is in the order of 5 mm, and the thickness of the imaging lens may be in the order of only 2.5 mm.

According to the invention, the illumination assembly comprises an array of semiconductor emitters, and an imaging lens arranged above the emitter array and adapted to direct or disperse the light from each emitter of the array into a corresponding target area region, whereby each emitter is associated with a specific region of the target area. The inventive illumination assembly is characterized in that the imaging lens comprises a surface pattern adapted to direct a portion of the light from each emitter beyond the boundary of the target area region of that emitter, i.e. light from neighbouring emitters will overlap in the target area, effectively preventing the separation width between those emitters from being imaged as a darker line in the target area.

The array can comprise any number of emitters, for example a 3 x 3 array of emitters.

The emitters can be top-emitting LEDs, for example, or any suitable semiconductor light-emitting device for the intended application. The lens effectively disperses the light from the emitter area onto the target area, whereby the shape of the target area is generally defined by the shape of the emitter array, i.e. the target area has the same aspect ratio as the emitter array.

The inventive illumination assembly overcomes the problem of the imaged gaps as described above. While the lens primarily behaves in the conventional manner to project the light from each emitter into the corresponding target area, the surface pattern alters the manner in which the light is projected, and has the effect of preventing the separation width (between any two adjacent active emitters) from being imaged as a darker "gap" in the target area.

The invention is based on the insight that a suitable surface pattern on the imaging lens can mix light from any two neighbouring emitters by an amount sufficient to "join" or "blend" the corresponding illuminated regions in the target area. When two or more adjacent emitters are active, the light projected into the target area will therefore exhibit a favourably uninterrupted light pattern, i.e. any two adjacent illuminated regions in the target area will not be separated by a darker "dividing line" or imaged gap. A further advantage of the inventive illumination assembly is that it can be realised essentially without any significant additional cost, since it is straightforward to add the surface pattern to the lens surface, for example when the lens itself is being formed.

Another advantage of the inventive illumination assembly, particularly when used with a segmented emitter, is that the surface pattern can essentially eliminate colour inhomogeneity around the border of an illuminated region in the target area, since the surface pattern mixes light from the outer edges of an emission area with light from within that emission area. In this way, the light arriving at the corresponding region of the target area is favourably homogenous. The surface pattern also ensures that local colour inhomogeneities, which would otherwise arise from an uneven distribution of phosphor particles in a conversion layer, are effectively evened out.

According to the invention, the method of manufacturing such an illumination assembly comprises the steps of arranging a plurality of emitters in the form of an array; forming an imaging lens to direct the light from each emitter into a corresponding region of the target area, and forming a surface pattern on the imaging lens to direct a portion of the light from each emitter beyond the boundary of the target area region of that emitter.

The dependent claims and the following description disclose particularly advantageous embodiments and features of the invention. Features of the embodiments may be combined as appropriate. Features described in the context of one claim category can apply equally to another claim category.

In the following, it may be assumed that the emitter array comprises top-emitting LEDs, and wherein the surface area of an emitter is in the order of 0.5 mm². The entire emitter array may have an area in the order of 5 mm². As indicated above, an emitter array can be made from discrete LEDs, or can be a "segmented emitter" made from a single semiconductor die in which the individual emitters are separated using any appropriate technology. In the following, it may be assumed that the separation width between any two adjacent emitters is at most 50 µm.

The array can comprise any number of emitters, for example a 3 x 3 array of emitters. The emitters can be top-emitting LEDs, for example, or any suitable semiconductor light-emitting device for the intended application.

The imaging lens can be of any suitable type, for example a Fresnel lens, a catadioptric lens, etc. As explained above, the imaging lens can be very small and can have a diameter of only 5 mm or less, and a correspondingly small thickness. In the following, the imaging lens may be assumed to have an essentially biconvex shape that refracts the light from the emitter array in such a way as to create a larger "image" of the array at a distance removed from the lens. The lens essentially determines the "field of view" illuminated by the assembly, and may be shaped according to the field of view of a camera for which the illumination assembly is used as a flash. The lens can be made from any suitable material and can be manufactured in any suitable manner. For example, the imaging lens can be made of an epoxy resin or a transparent thermoplastic such as polymethyl methacrylate, polycarbonate etc., and can be manufactured using any suitable technique, for example injection moulding.

The surface pattern can be formed on the "entrance face" and/or on the "exit face" of the lens. However, the exit face of the lens, i.e. the side of the lens that is oriented outward (towards the target area), may be exposed to the environment and may therefore be more vulnerable to damage. Therefore, in a particularly preferred embodiment of the invention, the surface pattern is formed on the "entrance face" of the lens, i.e. the side of the lens that is oriented towards the emitter array. Since the lens itself is very small, the dimensions of the surface pattern are correspondingly small as will be explained below.

The inventive illumination assembly can be used in a variety of applications involving a portable (i.e. mobile or handheld) device, for example in an augmented reality (AR) or virtual reality (VR) application to illuminate a "microdisplay" such as an LCOS (liquid crystal on silicon) display incorporated in an AR/VR headset. In the following, without restricting the invention in any way, it may be assumed that the illumination assembly is used in a flash arrangement of a handheld device such as a smartphone or "camera phone". For example, a camera phone can comprise a number of cameras (each with an image sensor and a lens to determine its field of view); a flash arrangement comprising an instance of the inventive illumination assembly; and a controller for actuating the emitters as appropriate when the camera arrangement is being used to capture an image of the target area or scene.

The emitter array can be mounted on a substrate with electrical connections to a suitable driver, so that each emitter can be driven independently of the others as required. The illumination assembly is completed by arranging the imaging lens over the emitter array. In a preferred embodiment, the imaging lens is formed with a flange about its perimeter so that it can be mounted in a housing (for example the rear of a camera phone) that has a corresponding annular aperture. The housing can have an annular chamfer shaped according to the field of view of the emitter array.

The surface pattern may be formed in a number of ways. Any surface pattern that achieves the desired objective - namely to eliminate the imaged gap between any two adjacent emitters without altering the aspect ratio of the imaged array - can be used. In a particularly preferred embodiment of the invention, the surface pattern has the form of sinusoidal "ripples" or "waves", with suitable dimensions. The peak height or amplitude of each wave or ridge is preferably very small, and the peak-to-peak distance or pitch is also preferably very small. Preferably, the surface pattern has a pitch of at most 1000 µm, more preferably at most 200 µm. The amplitude of the surface pattern is preferably at most 50 µm, more preferably at most 10 µm. Surface pattern parameters such as pitch and amplitude may be chosen under consideration of relevant lens parameters and may also be chosen under consideration of the separation width between emitters. In a particularly preferred embodiment of the invention, the surface pattern is rotationally symmetric, i.e. the microscopically small sinusoidal wave pattern is in the form of concentric rings or ridges separated by grooves or channels. Alternatively, a rotationally symmetric prismatic surface pattern may be formed on the lens surface. Here, instead of a sinusoidal wave, the pattern may have the form of a sawtooth wave.

Instead of a concentric arrangement of ridges and channels, the surface pattern can comprise an arrangement of many isolated protrusions or "outdentations", for example a multitude of microscopically small rounded or angular "beads" on the surface of the lens. Equally, the surface pattern can comprise an arrangement of rounded or angular indentations, depressions or pits in the surface of the lens. Such a surface pattern can also be rotationally symmetric, for example thousands of microscopically small indentions and/or outdentations arranged in an essentially rotationally symmetric configuration. Equally, an arrangement of rounded and/or angular indentations and/or outdentations can be formed with a random distribution. In a further preferred embodiment of the invention, the surface pattern is a holographic pattern, which may for example be embossed as a relief pattern onto the lens using an electroforming or electrodeposition technique on the moulding tool. In a further embodiment of the invention, the pattern formed on the surface of the lens can be a diffuse pattern, created for example by an electrical discharge machining technique. Regardless of the type of surface pattern, any relevant parameters that define the pattern can depend on the shape and size of the very small lens, and can also depend on the separation width between emitters.

The surface pattern can be made from the same material as the lens, and can be manufactured using any technique that is suitable for such a small lens. Conventional machining techniques, as used for example in the manufacture of significantly larger automotive front lighting lenses, cannot be deployed. Instead, in a preferred embodiment of the invention, a rotationally symmetric sinusoidal pattern with the very small desired dimensions can be obtained by preparing a corresponding mould using a highly-accurate diamond turning process, and subsequently forming the lens along with the surface pattern using an injection moulding technique. A surface pattern comprising isolated depressions or concentric grooves can be formed using a technique such as five-axis diamond turning to prepare the mould, but high quality milling or drilling procedures may be used if these can provide the desired surface smoothness. A diffuse surface pattern may also be obtained by treating the tool or mould using an electrical discharge machining ("spark erosion") procedure.

Other objects and features of the present invention will become apparent from the following detailed descriptions considered in conjunction with the accompanying drawings. It is to be understood, however, that the drawings are designed solely for the purposes of illustration and not as a definition of the limits of the invention.

### BRIEF DESCRIPTION OF THE DRAWINGS

Figure 1 shows an exemplary embodiment of the inventive illumination assembly;
Figure 2 shows a plan few of the imaging lens of the illumination assembly of Figure 1;
Figure 3 shows alternative surface patterns for the lens of the inventive illumination assembly;
Figure 4 compares a prior art illumination assembly and the illumination assembly of Figure 1;
Figure 5 shows a further cross-section through the illumination assembly of Figure 1;
Figure 6 illustrates the underlying principle of the illumination assembly of Figure 5;
Figure 7 shows a cross-section through a prior art illumination assembly;
Figure 8 and Figure 9 each show a portable device equipped with an embodiment of the inventive illumination assembly.

In the drawings, like numbers refer to like objects throughout. Objects in the diagrams are not necessarily drawn to scale.

### DETAILED DESCRIPTION OF THE EMBODIMENTS

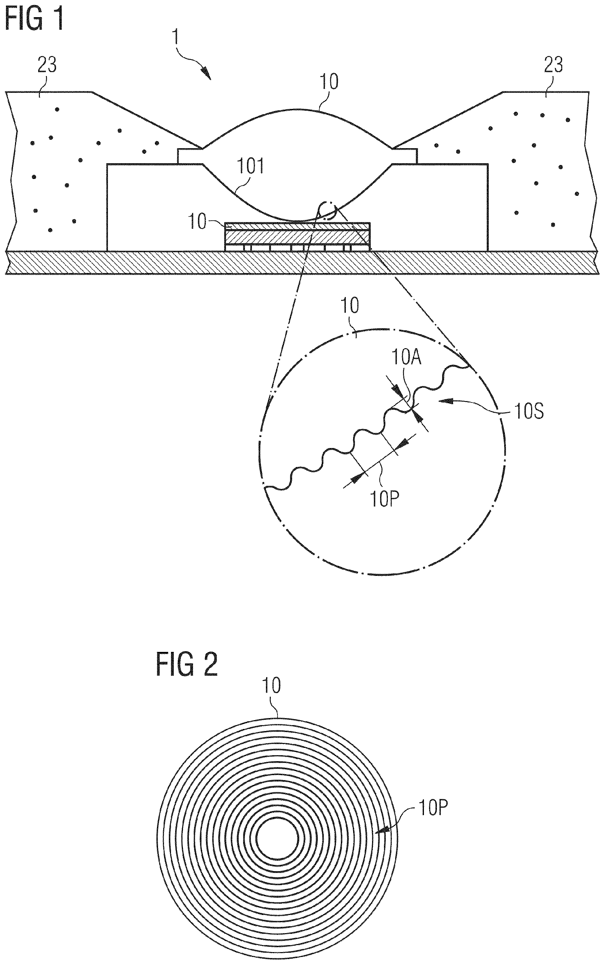

Figure 1 shows an exemplary embodiment of the inventive illumination assembly 1, in cross-section. The diagram shows an 3 x 3 emitter array 11 mounted on a substrate 12. The emitter array 11 is arranged underneath an imaging lens 10 which defines the field of view of the emitter array 11. Here, the imaging lens 10 has an essentially bi-convex form, and the underside 101 or light entry face 101 of the lens 10 comprises a surface pattern 10S. The enlarged view shows that the surface pattern 10S is essentially sinusoidal, i.e. with the form of a sine wave. Figure 2 shows a plan view of the underside 101 of the lens 10 (as "seen" from the emitter array), showing that the rotationally symmetric surface pattern 10S has the form of concentric ripples.

The surface pattern 10S can be microscopically small. For example, the lens 10 of Figures 1 - 2 may have a diameter in the order of 5 mm and a thickness of about 2.5 mm, and the amplitude 10A and pitch 10P of the surface pattern 10S can be 5 µm and 160 µm respectively.

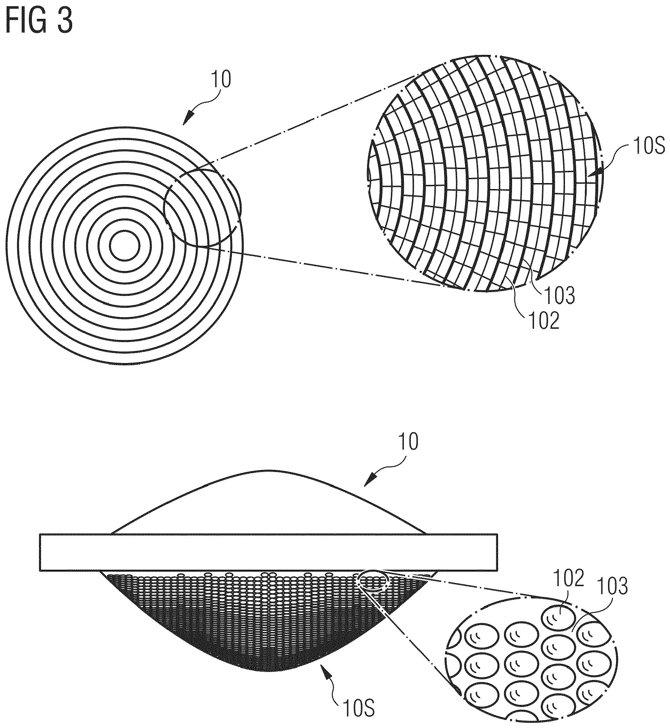

Figure 3 shows alternative surface patterns 10S. In the upper part of the diagram, the convex shape of the underside 101 of a lens 10 is augmented by a rotationally symmetric prismatic surface pattern 10S. Here, the surface pattern 10S can be regarded as concentric rings of tightly-packed small prisms, and the prisms can be formed by appropriately shaped angular outdentations 102 (protrusions) or angular indentations 103. Equally, the surface pattern 10S can comprise continuous concentric prisms.

In the lower part of the diagram, the underside 101 of a biconvex lens 10 is augmented by a surface pattern 10S comprising rounded protrusions 102 or flat "bumps" 102 arranged in a dense or closely-packed configuration. Equally, the surface pattern 10S can be defined as an arrangement of inversely-shaped indentations 103.

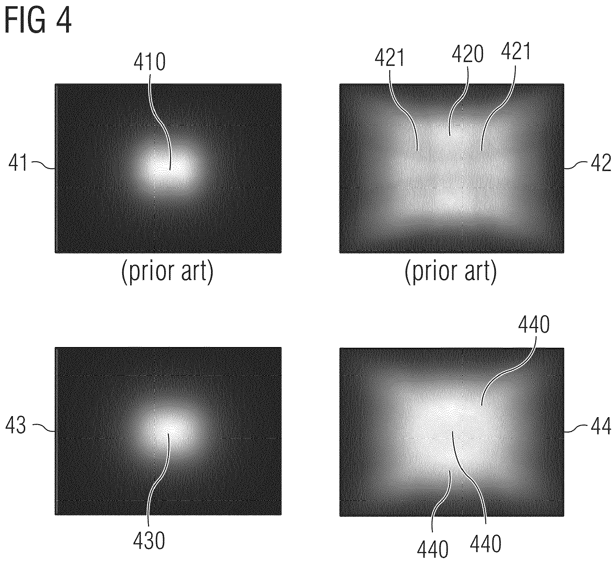

Figure 4 compares a conventional illumination assembly (top row) and the inventive illumination assembly (bottom row), in each case for a 3 x 3 emitter array positioned below an imaging lens. In order to demonstrate the effect of the emitter array, the target area is a simple flat surface. To illuminate a target area with a specific aspect ratio, for example a conventional aspect ratio of 4:3 used in a camera flash application, the emitter array will have the same overall aspect ratio. The shapes and relative sizes of the emitters are repeated in the target area. The conventional illumination assembly uses a plain biconvex lens; the inventive illumination assembly uses a similar lens, modified with a surface pattern 10S as shown in Figures 1 - 3. The upper left image 41 and lower left image 43 show the illumination distribution when only the central emitter is active. The lower left image 43 demonstrates that the modified lens 10 of the illumination assembly 1 steers or refracts the light from an emitter in a manner similar to the lens of the conventional assembly, i.e. the lens directs the light from each emitter at a specific region of the target area, while the surface pattern spreads the light in such a way that colour and/or brightness inhomogeneities are essentially blended out and no longer appear in the illuminated target area 430.

The upper right image 42 and lower right image 44 show the illumination distribution when all nine emitters are active. In the upper right image, the imaged emitter regions 420 are separated by darker imaged gaps 421 (appearing as two dark rows and two dark columns). The lower right image 44 demonstrates that the surface pattern 10S on the modified lens 10 of the illumination assembly 1 spreads the light from the emitters in such a way that the gaps between emitters are not imaged, so that the resulting illumination distribution is uniform and does not exhibit any dark regions between the nine imaged emitter regions 440.

Although this cannot be shown in a monochrome diagram, the surface pattern also has the effect of eliminating colour inhomogeneities, for example colour inhomogeneities arising from optical cross-talk and/or an uneven distribution of phosphor particles in the wavelength conversion layer(s).

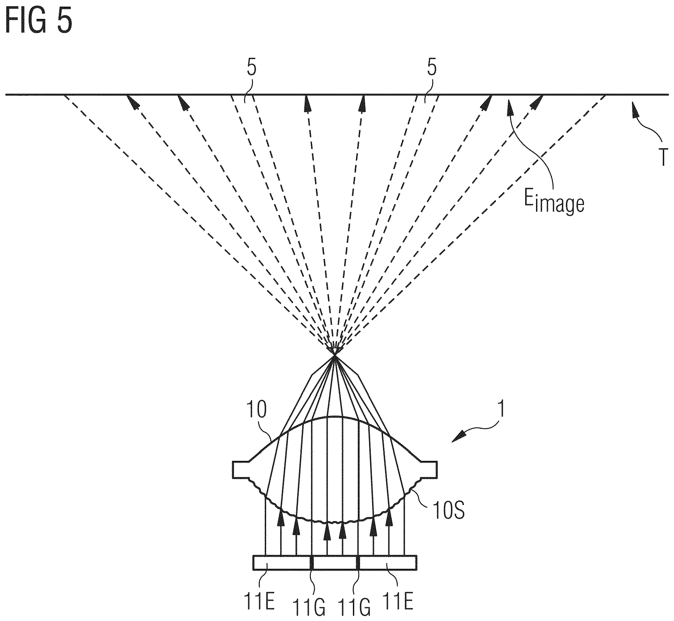

Figure 5 shows a further cross-section through the illumination assembly 1 of Figure 1, and shows exemplary light rays to illustrate the principle of operation. Light rays from the emitters 11E are refracted by the lens 10 and spread, so that the imaged emitters E_{image} overlap in the indicated regions 5, so that the light from adjacent emitters forms an uninterrupted illuminated region at the target area T.

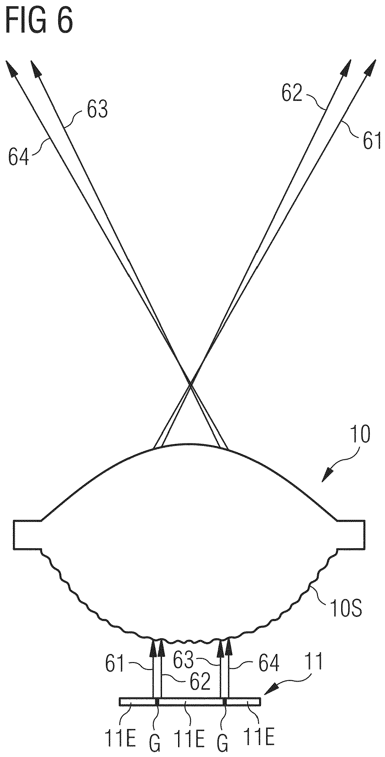

Figure 6 illustrates the underlying principle of the illumination assembly of Figure 5. The diagram shows the emitter array 11 and the biconvex imaging lens 10. Exemplary rays from active emitters 11E show how the light is "mixed" or directed by the imaging lens 10 and its surface pattern 10S. As can be seen on the left, light (represented by exemplary light rays 61, 62) from adjacent active emitters 11E is mixed in such a way as to avoid the gap G being imaged in the target area. As can be seen on the right, light from the edge of an emitter (represented by exemplary light ray 63) is mixed with light from further inside the emitter area (represented by exemplary light ray 64) to ensure colour homogeneity of the light in the illuminated target region E_{image}.

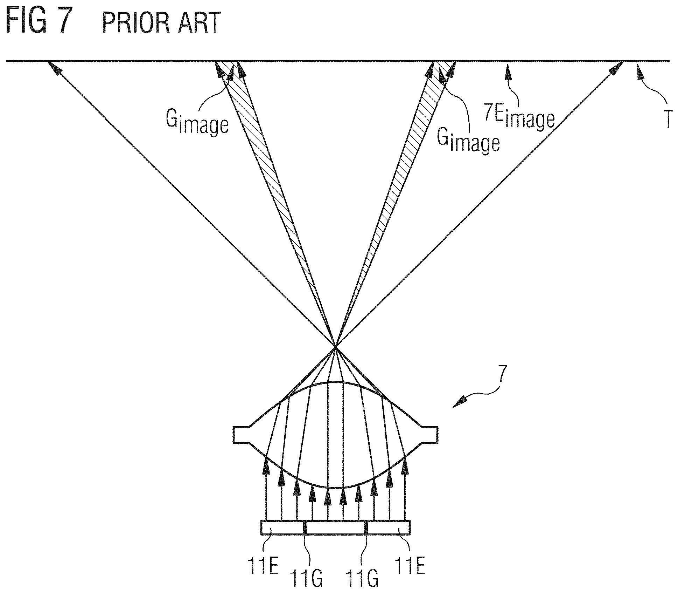

Figure 7 shows a similar cross-section through a prior art illumination assembly. Here also, a 3 x 3 emitter array is arranged underneath a biconvex imaging lens 70, which has an unmodified light entry surface. Light rays from the emitters 11E are refracted by the lens 10 and imaged at the target area T. Since adjacent emitters 11E are separated by gaps 11G, from which no light originates, these "dark lines" are also imaged at the target area T, which shows corresponding imaged gaps G_{image} between the imaged emitters 7E_{image}. As explained above, refraction or other effects at the edge of an emitter 11E can alter the colour of the light, so that the light at the border of an illuminated target region 7E_{image} can have a colour that is noticeably different from the colour within the illuminated target region 7E_{image}.

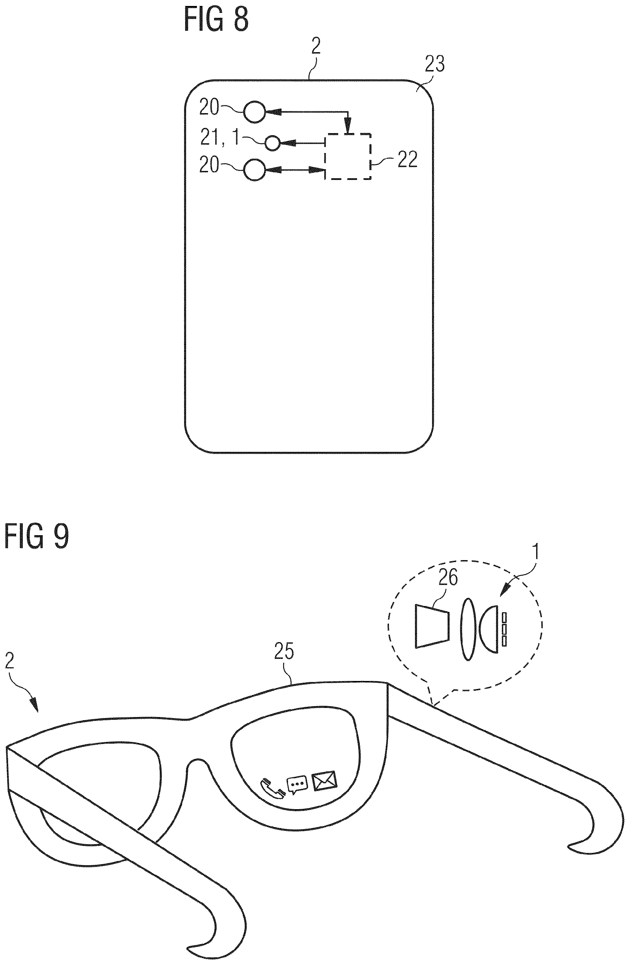

Figure 8 shows a portable device 2 equipped with an embodiment of the inventive illumination assembly 1. Here, the device is a camera phone 2 which is equipped with several cameras 20 and a flash 21. The flash 21 comprises the inventive illumination assembly 1, with the lens 10 mounted in the housing 23 of the camera phone 2. The assembly 1 can illuminate a target area that is typically at most a few metres away from the camera. As indicated, the camera phone 2 has a controller 22 for controlling the image sensors of the cameras 20 and the emitters 11E of the illumination assembly 1.

Figure 9 shows another type of portable device 2 equipped with an embodiment of the inventive illumination assembly 1. Here, the device is an AR headset 25, incorporating a micro-display 26 that is illuminated by an embodiment of the illumination assembly 1. In contrast to the camera phone application of Figure 8, the target area is even closer to the illumination assembly 1.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

**Reference signs**

| | |
|---|---|
| illumination assembly | 1 |
| imaging lens | 10 |
| surface pattern | 10S |
| amplitude | 10A |
| pitch | 10P |
| light entry face | 101 |
| protrusion | 102 |
| indentation | 103 |
| emitter array | 11 |
| emitter | 11E |
| gap | 11G |
| substrate | 12 |
| | |
| device | 2 |
| camera arrangement | 20 |
| flash arrangement | 21 |
| controller | 22 |
| housing | 23 |
| headset | 25 |
| micro-display | 26 |
| | |
| image | 41 - 44 |
| imaged emitter | 410, 420 |
| imaged gap | 421 |
| imaged emitter | 430, 440 |
| | |
| target area | T |
| imaged gap | G_{image} |
| imaged emitter | E_{image} |
| illuminated overlap | 5 |
| | |
| light ray | 61 - 64 |
| prior art assembly | 7 |
| imaging lens | 70 |
| imaged emitter | 7E_{image} |

## Claims

1. An illumination assembly (1) of a portable device (2), comprising
- an array (11) of semiconductor emitters (11E);
- an imaging lens (10) arranged above the emitter array (11) and adapted to direct the light from each emitter (11E) into a corresponding region (11E_{image}) of a target area (T);
**characterized in that**
- the imaging lens (10) comprises a surface pattern (10S) adapted to shape the light from adjacent emitters (11E) such that the corresponding imaged emitter regions (11E_{image}) overlap at the target area (T).

2. An illumination assembly according to the preceding claim, wherein the surface pattern (10S) is a sinusoidal pattern.

3. An illumination assembly according to any of the preceding claims, wherein the surface pattern (10S) is rotationally symmetric.

4. An illumination assembly according to any of the preceding claims, wherein the surface pattern (10S) has a pitch (10P) of at most 1.0 mm, more preferably at most 0.3 mm.

5. An illumination assembly according to any of the preceding claims, wherein the surface pattern (10S) has an amplitude (10A) of at most 0.1 mm, more preferably at most 0.02 mm.

6. An illumination assembly according to any of the preceding claims, wherein the surface pattern (10S) is a holographic surface pattern.

7. An illumination assembly according to any of the preceding claims, wherein the surface pattern (10S) comprises an arrangement of isolated protrusions (102) and/or an arrangement of isolated depressions (103).

8. An illumination assembly according to the preceding claim, wherein a protrusion (102) or depression (103) has any of: a spherical form, a prismatic form, a polygonal form.

9. An illumination assembly according to any of the preceding claims, wherein the surface pattern (10S) is formed on the light entrance surface (101) of the imaging lens (10).

10. An illumination assembly according to any of the preceding claims, wherein adjacent emitters (11E) of the emitter array (11) are separated by a gap in the order of 40 µm.

11. An illumination assembly according to any of the preceding claims, wherein the imaging lens is made from a transparent thermoplastic material.

12. A method of manufacturing an illumination assembly (1) according to any of claims 1 to 11, which method comprises the steps of
- arranging a plurality of emitters (11E) in the form of an array (11);
- providing an imaging lens (10) to direct the light from the emitter array (11) into a target area (T); and
- forming a surface pattern (10S) on the imaging lens (10), which surface pattern to shape the light from adjacent emitters (11E) such that the corresponding imaged emitter regions (11E_{image}) overlap at the target area (T).

13. A method according to the preceding claim, wherein the lens (10) is formed by injection moulding.

14. A method according to claim 12 or claim 13, comprising the steps of
- mounting the imaging lens (10) in housing (13); and
- arranging the emitter array (11) underneath the imaging lens (10).

15. A portable device (2) comprising an illumination assembly (1) according to any of claims 1 to 11.

## Amended claims

### Amended claims in accordance with Rule 137(2) EPC.

1. An illumination assembly (1) for a portable device (2), comprising
- an array (11) of semiconductor emitters (11E);
- a biconvex imaging lens (10) arranged above the emitter array (11) and adapted to direct the light from each emitter (11E) into a corresponding region (11E_{image}) of a target area (T);
**characterized in that**
- the light entry face (101) of the imaging lens (10) comprises a surface pattern (10S) adapted to shape the light from adjacent emitters (11E) such that the corresponding imaged emitter regions (11E_{image}) overlap at the target area (T).

2. An illumination assembly according to the preceding claim, wherein the surface pattern (10S) is a sinusoidal pattern.

3. An illumination assembly according to any of the preceding claims, wherein the surface pattern (10S) is rotationally symmetric.

4. An illumination assembly according to any of the preceding claims, wherein the surface pattern (10S) has a pitch (10P) of at most 1.0 mm, more preferably at most 0.3 mm.

5. An illumination assembly according to any of the preceding claims, wherein the surface pattern (10S) has an amplitude (10A) of at most 0.1 mm, more preferably at most 0.02 mm.

6. An illumination assembly according to any of the preceding claims, wherein the surface pattern (10S) is a holographic surface pattern.

7. An illumination assembly according to any of the preceding claims, wherein the surface pattern (10S) comprises an arrangement of isolated protrusions (102) and/or an arrangement of isolated depressions (103).

8. An illumination assembly according to the preceding claim, wherein a protrusion (102) or depression (103) has any of: a spherical form, a prismatic form, a polygonal form.

9. An illumination assembly according to any of the preceding claims, wherein the emitter array (11) comprises a 3 x 3 array of top-emitting LEDs (11E), and wherein the surface area of an emitter (11E) is in the order of 0.5 mm².

10. An illumination assembly according to any of the preceding claims, wherein adjacent emitters (11E) of the emitter array (11) are separated by a gap in the order of 40 µm.

11. An illumination assembly according to any of the preceding claims, wherein the imaging lens is made from a transparent thermoplastic material.

12. A method of manufacturing an illumination assembly (1) according to any of claims 1 to 11, which method comprises the steps of
- arranging a plurality of emitters (11E) in the form of an array (11);
- providing a biconvex imaging lens (10) to direct the light from the emitter array (11) into a target area (T); and
- forming a surface pattern (10S) on the light entry face (101) of the imaging lens (10), which surface pattern to shape the light from adjacent emitters (11E) such that the corresponding imaged emitter regions (11E_{image}) overlap at the target area (T).

13. A method according to the preceding claim, wherein the lens (10) is formed by injection moulding.

14. A method according to claim 12 or claim 13, comprising the steps of
- mounting the imaging lens (10) in housing (13); and
- arranging the emitter array (11) underneath the imaging lens (10).

15. A portable device (2) comprising an illumination assembly (1) according to any of claims 1 to 11.
